# EUROPÄISCHE PATENTANMELDUNG

(11) **EP 0 547 567 A1**
(43) Veröffentlichungstag der Anmeldung: **23.06.1993**
(21) Anmeldenummer: 92121345.0
(22) Anmeldetag: 15.12.1992
(51) Int. Cl.: F02D 35/00

(54) **Verfahren zur Regelung des Luft-Kraftstoff-Verhältnisses eines Verbrennungsmotors, insbesondere eines Verbrennungsmotors der Kolbenbauart**

(30) Priorität: 16.12.1991 DE 4141481
(71) Anmelder: Schatz, Oskar, Dr.-Ing., D-82131 Gauting (DE)
(72) Erfinder: Schatz, Oskar, Dr.-Ing., D-82131 Gauting (DE)
(74) Vertreter: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Zusammenfassung**

Zur Regelung des Luft-Kraftstoff-Verhältnisses eines Verbrennungsmotors, insbesondere eines Verbrennungsmotors der Kolbenbauart erfolgt beim Kaltstart und anderen Betriebszuständen mit Temperaturdefizit eine Beheizung der Brennkammer und ihres Inhalts und der Motor wird vom Start weg im Magerbetrieb betrieben. Dabei wird das Luft-Kraftstoffverhältnis ausschließlich durch eine Sauerstoffsonde (33) im Abgas ermittelt.

## Beschreibung

Die Erfindung betrifft ein Verfahren zur Regelung des Luft-Kraftstoff-Verhältnisses eines Verbrennungsmotors, insbesondere eines Verbrennungsmotors der Kolbenbauart, bei welchem beim Kaltstart und anderen Betriebszuständen mit Temperaturdefizit eine Beheizung der Brennkammer und ihres Inhalts erfolgt.

Bei Verbrennungsmotoren ist es bekannt, beim Kaltstart und bei anderen Betriebszuständen mit Temperaturdefizit die Temperatur im Brennraum zu erhöhen, um u.a. eine frühzeitige Zündung des Motors und eine Senkung der Emissions- und Verbrauchswerte zu erreichen.

Eine bekannte Maßnahme stellt die Brennluftheizung dar, bei der die Brennluft in einem Wärmetauscher aufgeheizt wird, bevor sie in das Saugrohr und von dort in den Motorzylinder einströmt.

Bei der Bestimmung des Luft-Kraftstoffverhältnisses von Verbrennungsmotoren werden Vergaser oder im Zusammenhang mit Kraftstoffeinspritzung Luftmengenmesser eingesetzt. Bei Kraftfahrzeugen mit geregeltem Katalysatorbetrieb werden zusätzlich im Abgasstrom angeordnete Sauerstoffsonden eingesetzt. Die Sauerstoffsonden sind geeignet, sehr schnell die erforderlichen Meßdaten zu liefern, sind aber erst beim Erreichen einer vorgegebenen Betriebstemperatur wirksam. Außerdem sind sie erst und nur dann betriebstauglich, wenn der Motor mit einem Luft- Kraftstoff-Verhältnis betrieben werden kann, das eine gewisse Menge an Restsauerstoff enthält, also bei einer Luftzahl von etwa Lambda ≧ 1, weshalb man bisher auf Vergaser bzw. Luftmengenmesser in Verbindung mit Kraftstoffeinspritzung auch bei geregeltem Katalysatorbetrieb nicht verzichtet hat.

Es sind heute drei Betriebsarten von Verbrennungsmotoren bekannt, welche sowohl Vergasermotoren als auch Motoren mit Kraftstoffeinspritzung umfassen, nämlich Betrieb ohne Abgaskatalysator, Betrieb mit ungeregeltem Abgaskatalysator und Betrieb mit geregeltem Abgaskatalysator.

Beim Betrieb mit geregeltem Abgaskatalysator ist außer der Verwendung eines Vergasers oder einer Kraftstoffeinspritzung mit Luftmengenmesser eine Sauerstoffsonde im Abgasstrom erforderlich, die das augenblickliche Luft-Kraftstoff-Verhältniss mit großer Präzision anzeigt und dadurch die genaue Regelung des dem augenblicklichen Betriebszustand entsprechenden optimalen Luft-Kraftstoff-Verhältnisses ermöglicht.

Beim Betrieb mit geregeltem Abgaskatalysator ist der Vergaser oder Luftmengenmesser lediglich erforderlich, um einen Betrieb des Motors im kalten Zustand zu ermöglichen, bei dem ein Luftüberschuß im Abgas noch nicht zur Verfügung steht, weil in diesem Betriebszustand mit Kraftstoffüberschuß gefahren werden muß.

Es ist die Aufgabe der vorliegenden Erfindung, ein Verfahren zur Bestimmung des Luft-Kraftstoff-Verhältnisses von Verbrennungsmotoren zu schaffen, bei welchem ein Vergaser oder ein Luftmengenmesser nicht erforderlich ist.

Zur Lösung geht die Erfindung von dem eingangs genannten Verfahren aus, das durch die Möglichkeit einer Brennkammerbeheizung und damit einer Verbrennung bei hohen Temperaturen vom Start weg einen Magerbetrieb des Verbrennungsmotors ermöglicht.

Die Lösung besteht deshalb bei dem eingangs genannten Verfahren darin, daß das Luft-Kraftstoff-Verhältnis vom Start weg mit Hilfe einer im Abgasstrom angeordneten Sauerstoffsonde bestimnmt wird.

Zwar entfällt aufgrund der sofortigen Anhebung der Brennkammertemperatur auf einen für den Magerbetrieb geeigneten Wert die übliche Warmlaufphase, doch läßt sich eine - wenn auch geringe - Verzögerung bis zum Wirksamwerden der Sauerstoffsonde im Abgasstrom kaum vermeiden.

Es besteht deshalb eine besonders vorteilhafte Ausgestaltung darin, daß für die Startphase das Luft-Kraftstoffverhältnis aufgrund von Erfahrungswerten und allgemeiner Daten über den Luftdurchsatz eingestellt ist.

Eine andere vorteilhafte Ausführungsform besteht darin, daß die Sauerstoffsonde vor dem Start vorgeheizt wird.

Noch eine andere zweckmäßige Ausgestaltung ist es, daß bei Kraftfahrzeugmotoren die Kraftstoffmenge durch das Fahrpedal beeinflußt wird und das Luft-Kraftstoff-Verhältnis aufgrund der allgemeinen Betriebsdaten vorgegeben wird und durch die Messung des Sauerstoffüberschusses im Abgas durch die Sauerstoffsonde geregelt wird.

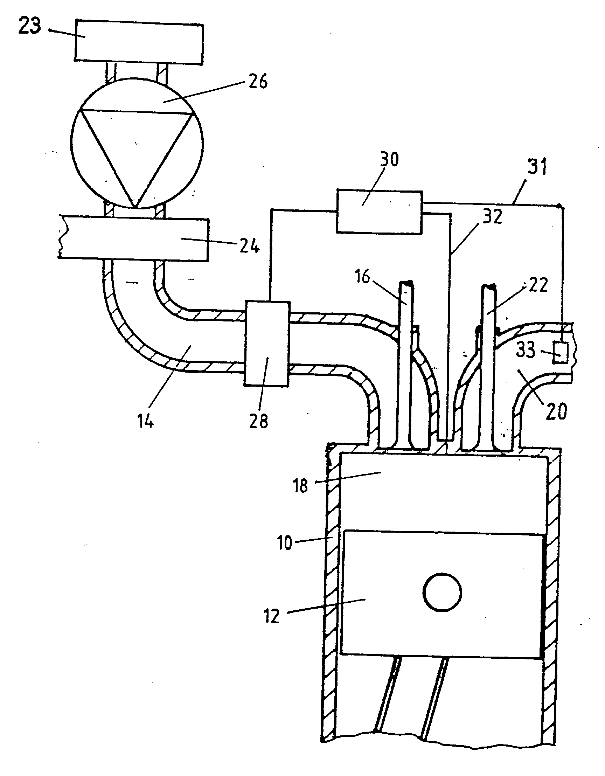

Anhand eines in der Zeichnung dargestellten Ausführungsbeispiels eines zur Durchführung der Erfindung geeigneten Motorzylinders wird die Erfindung näher erläutert.

Die Zeichnung zeigt schematisch den Ein- und Auslaßbereich eines Verbrennungsmotors der Kolbenbauart mit einem stromauf vom Einlaßventil angeordneten Zusatzventil und einem Lader.

In der Zeichnung ist nur ein Zylinder 10 eines Verbrennungsmotors dargestellt, der einen Motorkolben 12 enthält. Ein Einlaßkanal 14 mündet über ein Einlaßventil 16 in die Brennkammer 18 innerhalb des Zylinders 10. Eine Abgasleitung 20 ist über ein Auslaßventil 22 angeschlossen.

Der Einlaßkanal wird über einen Luftfilter 23 und einen Luftverteiler 24 mit Luft versorgt, die vom Kolben 12 nach öffnung des Einlaßventils 16 angesaugt wird. Alternativ kann dem Luftfilter 23 eine Ladevorrichtung 26 zur Verdichtung der Ladung nachgeschaltet sein. Gegebenenfalls kann in die über den Luftfilter 23 eingeströmte Luft auch Kraftstoff eingebracht werden, so daß über das Einlaßventil 16 statt Luft ein Kraftstoff-Luft-Gemisch in den Verbrennungsraum eingebracht wird.

Für die Anwendung der Erfindung ist eine vom Start weg ausreichend hohe Brennkammertemperatur Voraussetzung. Dies kann beispielsweise durch eine Brennluftheizung sichergestellt werden. Beim gezeigten Beispiel wird die Energie zur Erzeugung der erforderlichen Brennkammertemperatur bei Bedarf der Kolbenarbeit entnommen, wobei eine Abstimmung in der Weise erfolgt, daß die Kolbenarbeit nicht nur die jeweils gewünschte Luftmenge fördert, sondern daß ein Überschuß an kinetischer Energie vorhanden ist, der sich in der Brennkammer in Wärme umwandelt.

Um einerseits die geförderte Luftmenge dem jeweils bestehenden Bedarf anzupassen und andererseits den Bedarf an überschüssiger kinetischer Energie für die Temperaturerhöhung in der Brennkammer zu decken, ist stromauf vom Einlaßventil 16 im Einlaßkanal 14 ein Zusatzventil 28 angeordnet, das geeignet ist, den Einlaßkanal 14 zu sperren. Diesem Zusatzventil 28 ist eine Steuereinheit zugeordnet, die nur schematisch dargestellt und mit 30 bezeichnet ist. Sie erhält über eine Leitung 31 Informationen von einer im Abgasstrom angeordneten Sauerstoffsonde 33, über eine Leitung 32 Informationen über den Betriebszustand des Motors und gegebenenfalls, z.B. abgeleitet vom Fahrpedal, Informationen über den Fahrwunsch des Fahrers eines mit dem Motor ausgestatteten Kraftfahrzeugs.

Mit Hilfe des Zusatzventils 28 läßt sich die Luftzufuhr in zwei Phasen unterteilen.

Im Ruhezustand ist das Zusatzventil 28 beispielsweise geöffnet, so daß Ladung in den Zylinder 10 eintreten kann. Abhängig von den der Steuereinheit 30 zugeleiteten Daten wird das Zusatzventil 28 gegebenenfalls zeitweilig geschlossen und beendet dadurch eine etwaige Luftzufuhr in die Brennkammer 18 in einer ersten Phase. Diese Luftzufuhr in der ersten Phase kann aber auch vollständig unterbleiben oder es kann die Luftzufuhr während der ersten Phase durch das Zusatzventil 28 gedrosselt sein.

Während der Schließphase oder Drosselphase des Zusatzventils 28 wird der Druck in der Brennkammer 18 durch die Kolbenarbeit abgesenkt. Diese Druckabsenkung in der Brennkammer 18 verursacht eine gegenüber der Strömungsgeschwindigkeit der Ladung vor der Schließphase des Zusatzventils 28 erhöhte Geschwindigkeit der nach Öffnung des Zusatzventils 28 in einer zweiten Phase in die Brennkammer 18 einströmenden Ladung, deren kinetische Energie sich beim Abbremsen des Ladungsstroms in Druck und damit in Verdichtung umwandelt. Dabei entsteht unmittelbar in der Brennkammer 18 Wärme. Durch entsprechende Bemessung der Schließdauer und Phasenlage des Zusatzventils 28 wird der Überschuß an kinetischer Energie bestimmt, der durch Umwandlung in Wärme die Temperatur im Brennraum auf das gewünschte Niveau anhebt.

Um unabhängig von der gewünschten Temperaturerhöhung den Luftdurchsatz entsprechend dem augenblicklichen Bedarf des Motors zu bemessen, wird die Einströmdauer während der zweiten Phase beeinflußt und gegebenenfalls durch erneutes Schliessen des Zusatzventils 28 vor dem Schließen des Einlaßventils 16 beendet. Hierbei wird gegebenenfalls eine in der ersten Phase eingeströmte Luftmenge berücksichtigt.

Da sich vom Start weg die Brennkammertemperatur auf einem Niveau halten läßt, das einen Magerbetrieb ermöglicht, kann der übliche Luftmengenmesser oder Vergaser zur Regelung des Luft-Kraftstoff-Verhältnisses entfallen und die Regelung in Abhängigkeit vom Meßergebnis der kostengünstigeren Sauerstoffsonde erfolgen. Dadurch ergibt sich nicht nur eine Kostensenkung des Systems zumindest beim Betrieb mit geregeltem Abgaskatalysator, sondern bei allen drei oben genannten Betriebsarten auch eine Reduzierung der Abgasemissionen beim Kaltstart und während des Warmlaufs, sowie eine entsprechende Einsparung im Kraftstoffverbrauch.

## Patentansprüche

1. Verfahren zur Regelung des Luft-Kraftstoff-Verhältnisses eines Verbrennungsmotors, insbesondere eines Verbrennungsmotors der Kolbenbauart, bei welchem beim Kaltstart und anderen Betriebszuständen mit Temperaturdefizit eine Beheizung der Brennkammer und ihres Inhalts erfolgt, *dadurch gekennzeichnet*, daß der Motor vom Start weg im Magerbetrieb betrieben wird und daß das Luft-Kraftstoffverhältnis ausschließlich durch eine Sauerstoffsonde im Abgas bestimmt wird.

2. Verfahren nach Anspruch 1, *dadurch gekennzeichnet,* daß für die Startphase das Luft-Kraftstoffverhältnis aufgrund Erfahrungswerten und allgemeiner Daten über den Luftdurchsatz eingestellt ist.

3. Verfahren nach Anpruch 1, *dadurch gekennzeichnet,* daß die Sauerstoffsonde vor dem Start vorgeheizt wird.die Sauerstoffsonde vor dem Start vorgeheizt wird.

4. Verfahren nach einem der vorhergehenden Ansprüche, *dadurch gekennzeichnet,* daß bei Kraftfahrzeugmotoren die Kraftstoffmenge durch das Fahrpedal beeinflußt wird und das Luft-Kraftstoff-Verhältnis aufgrund der allgemeinen Betriebsdaten vorgegeben wird und durch die Messung des Sauerstoffüberschusses im Abgas durch die Sauerstoffsonde geregelt wird.
